# EUROPÄISCHE PATENTSCHRIFT

(11) **EP 2 788 416 B1**
(45) Veröffentlichungstag und Bekanntmachung des Hinweises auf die Patenterteilung: **19.04.2023**
(21) Anmeldenummer: 12798157.9
(22) Anmeldetag: 28.11.2012
(51) Int. Cl.: C08K 3/32, C08K 5/00, C09K 21/02, C09K 21/04, C09K 21/10, C09K 21/12, C08K 5/5313

(54) **FLAMMSCHUTZMITTEL-MISCHUNGEN ENTHALTEND FLAMMSCHUTZMITTEL UND ALUMINIUMPHOSPHITE, VERFAHREN ZU IHRER HERSTELLUNG UND IHRE VERWENDUNG**
FLAME RETARDANT BLENDS CONTAINING FLAME RETARDANT AND ALUMINIUM PHOSPHITE, PROCESS FOR THEIR PREPARATION AND THEIR USE
MÉLANGES RETARDATEURS DE FLAMME CONTENANT DES RETARDATEURS DE FLAMME ET DES PHOSPHITES D'ALUMINIUM, PROCÉDÉS DE PRODUCTION DESDITS MÉLANGES ET LEUR UTILISATION

(30) Priorität: 05.12.2011 DE 102011120200
(43) Veröffentlichungstag der Anmeldung: 15.10.2014
(73) Patentinhaber: Clariant International Ltd, 4132 Muttenz (CH)
(72) Erfinder: BAUER, Harald, 50170 Kerpen (DE); HÖROLD, Sebastian, 86420 Diedorf (DE); SICKEN, Martin, 51149 Köln (DE)
(74) Vertreter: Mikulecky, Klaus
(86) Internationale Anmeldenummer: PCT/EP2012/004905
(87) Internationale Veröffentlichungsnummer: WO 2013/083247

(56) Entgegenhaltungen:
- EP-A1- 0 838 493
- EP-A1- 1 624 015
- WO-A1-2012/045414
- US-A1- 2008 090 950

## Beschreibung

Die vorliegende Erfindung betrifft Flammschutzmittel-Mischungen enthaltend Flammschutzmittel und Aluminiumphosphite, Verfahren zu ihrer Herstellung und ihre Verwendung.

Aus dem Stand der Technik sind Flammschutzmittel bekannt, welche alleine oder zusammen mit anderen Komponenten, insbesondere Synergisten, in den verschiedenartigsten Polymeren eingesetzt werden. Diese Synergisten, auch Flammschutzmittelsynergisten genannt, müssen selbst nicht flammschutzaktiv sein, können aber die Wirksamkeit von Flammschutzmitteln wesentlich steigern. Üblicherweise werden die verschiedenen Komponenten, wie beispielsweise Flammschutzmittel, Flammschutzmittelsynergist, Additive und Füllstoffe durch Kneten und Extrusion mit dem flammzuschützenden Polymer vermischt. Dies erfolgt bei Temperaturen, bei denen das Polymer geschmolzen vorliegt und die für kurze Zeit 320 °C deutlich überschreiten können. Alle Komponenten, insbesondere die Flammschutzmittel und die Flammschutzmittelsynergisten müssen diese Temperaturen unzersetzt überstehen können, um ihre Wirkung, d. h. hier die Flammhemmung, beizubehalten und ein flammgeschütztes Polymergemisch zu erhalten.

So beschreibt die EP-A-1624015 flammgeschützte Polymermassen, ein Verfahren zu deren Herstellung und flammgeschützte Polymerformkörper.

Hier wird die Aufgabe gestellt, flammgeschützte Polymere zusätzlich mit Nanofillern zu stabilisieren und damit die Glühdrahtentzündungstemperatur (GWIT) anzuheben. Es soll hierbei vermieden werden, dass der Nanofiller als Inertsubstanz wirkt und additiv zum Flammschutzmittel eingesetzt wird, wobei der Festkörperanteil im flammgeschützten Polymerformkörper erhöht würde, was mit einem Verlust an mechanischen (positiven) Eigenschaften des Polymeren einhergeht.

Diese Aufgabe wird in EP-A-1624015 durch die Verwendung von nanoteiligen phosphorhaltigen Flammschutzmitteln gelöst.

In der EP-A-0838493 wird die Aufgabe, Formmassen auf Basis halogenhaltiger Polymere für Kabelummantelungen zu verwenden, die die Anforderungen an Thermostabilität und Alterungsbeständigkeit erfüllen, dadurch gelöst, dass eine Formmasse, enthaltend mindestens ein halogenhaltiges Polymer und eine Stabilisatorkombination, eingesetzt wird. Die Stabilisatorkombination umfasst ein Hydrotalcit und eine basische Calcium-Aluminium-Hydroxyverbindung, zudem bevorzugt ein Zinksalz.

In der WO-A-2012/046414 wird die Aufgabe, eine Flammschutzmittel-StabilisatorKombination, die eine ganze Reihe von Polymer-stabilisierenden Eigenschaften aufweist, zur Verfügung zu stellen, dadurch gelöst, dass eine Mischung einer Dialkylphosphinsäure mit einem Salz der phosphorigen Säure und gegebenenfalls weiteren Substanzen in speziellen Mengenverhältnissen eingesetzt wird.

Es wurde überraschend gefunden, dass die erfindungsgemäßen Mischungen von Flammschutzmitteln mit Aluminiumphosphiten deutlich thermostabiler sind, als wenn Flammschutzmittel alleine bzw. Aluminiumphosphite alleine eingesetzt werden. Auch zeigt sich ein synergistischer Effekt der beanspruchten Mischungen, wenn sie als Flammschutzmittel ihre Wirkung entfalten.

Die Erfindung betrifft daher Flammschutzmittel-Mischungen enthaltend Flammschutzmittel und Aluminiumphosphite, wobei es sich bei den Aluminiumphosphiten um solche der Formeln (II) und/oder (III) handelt,

Al_{2,00}M_{z}(HPO₃)_{y}(OH)ᵥ x (H₂O)_{w} (II)

in der
- M: Alkalimetallionen
- z: 0,01 bis 1,5
- y: 2,63 bis 3,5
- v: 0 bis 2 und w 0 bis 4
bedeutet,

Al_{2,00}(HPO₃)ᵤ(H₂PO₃)ₜ x (H₂O)ₛ (III)

in der
- u: 2 bis 2,99
- t: 2 bis 0,01 und
- s: 0 bis 4
bedeutet
und/oder um Mischungen von Aluminiumphosphit der Formel (III) mit Aluminiumsalzen handelt.

Bevorzugt handelt es sich bei dem Flammschutzmittel um Dialkylphosphinsäuren und/oder deren Salze; um Kondensationsprodukte des Melamins und/oder Umsetzungsprodukte des Melamins mit Phosphorsäure und/oder um Umsetzungsprodukte von Kondensationsprodukten des Melamins mit Polyphosphorsäure oder Gemischen davon; um stickstoffhaltige Phosphate der Formeln (NH₄)_{y} H₃-_{y} PO₄ bzw. (NH₄ PO₃)_{z}, mit y gleich 1 bis 3 und z gleich 1 bis 10.000; um Benzoguanamin, Tris(hydroxyethyl)isocyanurat, Allantoin, Glycouril, Melamin, Melamincyanurat, Dicyandiamid und/oder Guanidin; um Magnesiumoxid, Calciumoxid, Aluminiumoxid, Zinkoxid, Manganoxid, Zinnoxid, Aluminiumhydroxid, Böhmit, Dihydrotalcit, Hydrocalumit, Magnesiumhydroxid, Calciumhydroxid, Zinkhydroxid, Zinnoxidhydrat, Manganhydroxid, Zinkborat, basisches Zink-Silikat und/oder Zinkstannat.

Bevorzugt entsprechen die Dialkylphosphinsäuren oder deren Salze der Formel (IV), 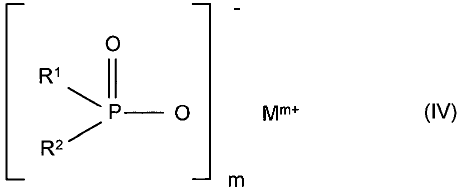 worin
- R¹, R²: gleich oder verschieden sind und C₁-C₆-Alkyl, linear oder verzweigt;
- M: Mg, Ca, Al, Sb, Sn, Ge, Ti, Fe, Zr, Zn, Ce, Bi, Sr, Mn, Li, Na, K, H
und/oder eine protonierte Stickstoffbase ;
- m: 1 bis 4 bedeuten.

Bevorzugt handelt es sich bei dem Flammschutzmittel auch um Melam, Melem, Melon, Dimelaminpyrophosphat, Melaminpolyphosphat, Melampolyphosphat, Melonpolyphosphat und/oder Melempolyphosphat und/oder gemischte Polysalze davon und/oder um Ammoniumhydrogenphosphat, Ammoniumdihydrogenphosphat und/oder Ammoniumpolyphosphat.

Bevorzugt handelt es sich bei dem Flammschutzmittel auch um Aluminiumhypophosphit, Zinkhypophosphit, Calciumhypophosphit, Natriumphosphit, Monophenylphosphinsäure und deren Salze, Mischungen von Dialkylphosphinsäuren und deren Salzen und Monoalkylphosphinsäuren und deren Salzen, 2-Carboxyethyl-alkylphosphinsäure und deren Salze, 2-Carboxyethyl-methylphosphinsäure und deren Salze, 2-Carboxyethylarylphosphinsäure und deren Salze, 2-Carboxyethyl-phenylphosphinsäure und deren Salze, Oxa-10-phosphaphenanthrene (DOPO) und dessen Salze und Addukte an para-Benzochinon bzw. Itaconsäure und/oder deren Salze.

Bevorzugt bedeutet beim Aluminiumphosphit der Formel (II)
- z: 0,15 bis 0,4
- y: 2,80 bis 3
- v: 0,1 bis 0,4 und
- w: 0,01 bis 0,1.

Bevorzugt bedeutet beim Aluminiumphosphit der Formel (III)
- u: 2,834 bis 2,99
- t: 0,332 bis 0,03 und
- s: 0,01 bis 0,1.

Die Erfindung betrifft auch Flammschutzmittel-Mischungen nach einem oder mehreren der Ansprüche 1 bis 9, enthaltend 0,1 bis 99,9 Gew.-% Flammschutzmittel und 0,1 bis 99,9 Gew.-% Aluminiumphosphite der Formeln (II) und/oder (III) und/oder Mischungen von Aluminiumphosphit der Formel (III) mit Aluminiumsalzen.

Bevorzugt enthalten die Flammschutzmittel-Mischungen 50 bis 99,9 Gew.-% Flammschutzmittel und 0,1 bis 50 Gew.-% Aluminiumphosphite der Formeln (II) und/oder (III) und/oder
Mischungen von Aluminiumphosphit der Formel (III) mit Aluminiumsalzen.

Die Erfindung betrifft auch ein Verfahren zur Herstellung von Flammschutzmittel-Mischungen nach einem oder mehreren der Ansprüche 1 bis 9, dadurch gekennzeichnet, dass man pulverförmige Flammschutzmittel mit pulverförmigen Aluminiumphosphiten der Formeln (II) und/oder (III) und/oder Mischungen von Aluminiumphosphit der Formel (III) mit Aluminiumsalzen mischt.

Die Erfindung betrifft auch die Verwendung von Flammschutzmittel-Mischungen nach einem oder mehreren der Ansprüche 1 bis 9 als Zwischenprodukt für weitere Synthesen, als Binder, als Vernetzer bzw. Beschleuniger beim Aushärten von Epoxyharzen, Polyurethanen, ungesättigten Polyesterharzen, als Polymerstabilisatoren, als Pflanzenschutzmittel, als Sequestrierungsmittel, als Mineralöl-Additiv, als Korrosionsschutzmittel, in Wasch- und Reinigungsmittelanwendungen, in Elektronikanwendungen.

Bevorzugt ist die Verwendung von Flammschutzmittel-Mischungen nach einem oder mehreren der Ansprüche 1 bis 9 in oder als Flammschutzmittel, insbesondere in oder als Flammschutzmittel für Klarlacke und Intumeszenzbeschichtungen, in oder als Flammschutzmittel für Holz und andere cellulosehaltige Produkte, in oder als reaktive und/oder nicht reaktive Flammschutzmittel für Polymere, zur Herstellung von flammgeschützten Polymerformmassen, zur Herstellung von flammgeschützten Polymerformkörpern und/oder zum flammhemmend Ausrüsten von Polyester und Cellulose-Rein- und Mischgeweben durch Imprägnierung und/oder als Synergist und/oder als Synergist in weiteren Flammschutzmittel-Mischungen.

Die Erfindung umfasst auch flammgeschützte thermoplastische oder duroplastische Polymerformmasse, Polymer-Formkörper, -Filme, -Fäden und/oder -Fasern, enthaltend 0,1 bis 45 Gew.-% Flammschutzmittel-Mischungen nach einem oder mehreren der Ansprüche 1 bis 9, 55 bis 99,9 Gew.-% thermoplastisches oder duroplastisches Polymer oder Mischungen derselben, 0 bis 55 Gew.-% Additive und 0 bis 55 Gew.-% Füllstoff bzw. Verstärkungsmaterialien, wobei die Summe der Komponenten 100 Gew.-% beträgt.

Die Erfindung betrifft bevorzugt flammgeschützte thermoplastische oder duroplastische Polymerformmasse, Polymer-Formkörper, Filme, -Fäden und/oder -Fasern, enthaltend 1 bis 30 Gew.-% Flammschutzmittel-Mischungen nach einem oder mehreren der Ansprüche 1 bis 9, 10 bis 97 Gew.-% thermoplastisches oder duroplastisches Polymer oder Mischungen derselben, 1 bis 30 Gew.-% Additive und 1 bis 30 Gew.-% Füllstoff bzw. Verstärkungsmaterialien, wobei die Summe der Komponenten 100 Gew. % beträgt.

Bevorzugt handelt es sich bei dem Kunststoff der flammgeschützten thermoplastischen oder duroplastischen Polymerformmasse, Polymer-Formkörper, Filme, -Fäden und/oder -Fasern um thermoplastische Polymere der Art Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol) oder PPE/HIPS (Polyphenylenether/Polystyrol-HI) Kunststoffe und/oder um duroplastische Polymere der Art ungesättigter Polyester und Epoxidharze.

Bevorzugt weisen die erfindungsgemäßen Mischungen eine Teilchengröße von 0,1 bis 1000 µm auf.

Bevorzugt weisen die erfindungsgemäßen Mischungen eine Schüttdichte von 80 bis 800 g/l, besonders bevorzugt von 200 bis 700 g/l auf.

Bevorzugt weisen die erfindungsgemäßen Mischungen einen L-Farbwerte von 85 bis 99,9, besonders bevorzugt von 90 bis 98 auf.

Bevorzugt weisen die erfindungsgemäßen Mischungen einen a-Farbwerte von -4 bis +9, besonders bevorzugt -2 bis +6, auf.

Bevorzugt weisen die erfindungsgemäßen Mischungen einen b-Farbwerte von -2 bis +6, besonders bevorzugt -1 bis +3, auf.

Die Farbwerte werden im System nach Hunter (CIE-LAB-System, Commission Internationale d'Eclairage) angegeben. L-Werte gehen von 0 (schwarz) bis 100 (weiß), a-Werte von -a (grün) bis +a (rot) und b-Werte von -b (blau) bis +b (gelb).

Bevorzugte Dialkylphosphinsäure-Salze sind Aluminiumtrisdiethylphosphinat, Aluminiumtrismethylethylphosphinat, Titanylbisdiethylphosphinat, Titantetrakisdiethylphosphinat, Titanylbismethylethylphosphinat, Titantetrakismethylethylphosphinat, Zinkbisdiethylphosphinat, Zinkbismethylethylphosphinat und Mischungen davon.

Die erfindungsgemäßen Mischungen umfassen grundsätzlich auch Mischungen von einem oder mehrerer Flammschutzmittel mit einem oder mehreren Aluminiumphosphiten, d. h. es sind Dreier-, Vierer- oder Mehrfachmischungen möglich.

Bevorzugte Polymer-Additive für flammgeschützte Polymerformmassen und flammgeschützte Polymer-Formkörper sind UV-Absorber, Lichtschutzmittel, Gleitmittel, Farbmittel, Antistatika, Nukleierungsmittel, Füllstoffe, Verstärkungsmittel und/oder Synergisten

Erfindungsgemäß bevorzugt ist die Anwendung der erfindungsgemäßen flammgeschützten Polymer-Formkörper als Lampenteile wie Lampenfassungen und -halterungen, Stecker und Steckerleisten, Spulenkörper, Gehäuse für Kondensatoren oder Schaltschütze sowie Sicherungsschalter, Relaisgehäuse und Reflektoren.

Die Erfindung betrifft auch Intumeszenz-Flammschutz-Beschichtung enthaltend 1 bis 50 % der erfindungsgemäßen Flammschutzmittel-Mischungen enthaltend Flammschutzmittel und Aluminiumphosphite, 0 bis 60 % Ammoniumpolyphosphat sowie 0 bis 80 Gew.-% Bindemittel, Schaumbildner, Füllstoffe und/oder Polymeradditive.

Bei den Mischungen von Aluminiumphosphit der Formel (I) mit schwerlöslichen Aluminiumsalzen und stickstofffreien Fremdionen handelt es sich bei den schwerlöslichen Aluminiumsalzen bevorzugt um Aluminumhydroxid, Aluminiumhydroxychlorid, Polyaluminiumhydroxyverbindungen, Aluminiumcarbonate, Hydrotalcite (Mg₆Al₂(OH)₁₆CO₃ * nH₂O), Dihydroxyaluminiumnatriumcarbonat (NaAl(OH)₂CO₃), Aluminiumoxide, Aluminiumoxid-Hydrat, gemischte Aluminiumoxidhydroxide, basisches Alumiumsulfat und/oder Alunit und bei den Fremdionen bevorzugt um Chloride, komplexe Chloride, Bromide; um Hydroxide, Peroxide, Peroxidhydrate, Sulfite, Sulfate, Sulfathydrate, saure Sulfate, Hydrogensulfate, Peroxosulfate, Peroxodisulfate; um Nitrate; um Carbonate, Percarbonate, Stannate; um Borate, Perborate, Perborathydrate; um Formiate, Acetate, Propionate, Lactate und/oder Ascorbate und/oder um Kationen der Elemente Li, Na, K, Mg, Ca, Ba, Pb, Sn, Cu, Zn, La, Ce, Ti, Zr, V, Cr, Mn, Fe, Co und/oder Ni.

Bevorzugt handelt es sich bei den Aluminiumsalzen in den Mischungen von Aluminiumphosphit der Formel (III) mit Aluminiumsalzen um Aluminiummetall, Aluminiumlegierungen, Oxide, Hydroxide, Peroxide, Peroxidhydrate, Carbonate, Percarbonate, gemischte Carbonate/Hydrate, Formiate, Acetate, Propionate, Stearate, Lactate, Ascorbate, Oxalate oder um Aluminiumsalze mit Anionen von Säuren, die einen höheren Dampfdruck haben als phosphorige Säure.

Bevorzugt entstammen die Polymere aus der Gruppe der thermoplastischen Polymere wie Polyester, Polystyrol oder Polyamid und/oder der duroplastischen Polymere.

Bevorzugt handelt es sich bei den Polymeren um Polymere von Mono- und Diolefinen, beispielsweise Polypropylen, Polyisobutylen, Polybuten-1, Poly-4-Methyl-penten-1, Polyisopren oder Polybutadien sowie Polymerisate von Cycloolefinen wie z. B. von Cyclopenten oder Norbornen; ferner Polyethylen (das gegebenenfalls vernetzt sein kann), z. B. Polyethylen hoher Dichte (HDPE), Polyethylen hoher Dichte und hoher Molmasse (HDPE-HMW), Polyethylen hoher Dichte und ultrahoher Molmasse (HDPE-UHMW), Polyethylen mittlerer Dichte (MDPE), Polyethylen niederer Dichte (LDPE), lineares Polyethylen niederer Dichte (LLDPE), verzweigtes Polyethylen niederer Dichte (VLDPE), sowie Mischungen davon.

Bevorzugt handelt es sich bei den Polymeren um Copolymere von Mono- und Diolefinen untereinander oder mit anderen Vinylmonomeren, wie z. B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere und deren Copolymere mit Kohlenstoffmonoxid, oder Ethylen-Acrylsäure-Copolymere und deren Salze (lonomere), sowie Terpolymere von Ethylen mit Propylen und einem Dien, wie Hexadien, Dicyclopentadien oder Ethylidennorbornen; ferner Mischungen solcher Copolymere untereinander, z. B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren wie z. B. Polyamiden.

Bevorzugt handelt es sich bei den Polymeren um Kohlenwasserstoffharze (z. B. C₅-C₉) inklusive hydrierte Modifikationen davon (z. B. Klebrigmacherharze) und Mischungen von Polyalkylenen und Stärke.

Bevorzugt handelt es sich bei den Polymeren um Polystyrol (Polystyrol^{®} 143E (BASF)), Poly-(p-Methylstyrol), Poly-(alpha-Methylstyrol).

Bevorzugt handelt es sich bei den Polymeren um Copolymere von Styrol oder alpha-Methylstyrol mit Dienen oder Acrylderivaten, wie z. B. Styrol-Butadien, Styrol-Acrylnitril, Styrol-Alkylmethacrylat, Styrol-Butadien-Alkylacrylat und - methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z. B. einem Polyacrylat, einem Dien-Polymeren oder einem Ethylen-Propylen-Dien-Terpolymeren; sowie Block-Copolymere des Styrols, wie z. B. Styrol-Butadien-Styrol, Styrol-Isopren-Styrol, Styrol-Ethylen/Butylen-Styrol oder Styrol-Ethylen/Propylen-Styrol.

Bevorzugt handelt es sich bei den Polymeren um Pfropfcopolymere von Styrol oder alpha-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen, wie sie z. B. als sogenannte ABS-, MBS-, ASA- oder AES-Polymere bekannt sind.

Bevorzugt handelt es sich bei den Styrol-Polymeren um eher grobporigen Schaum wie EPS (expandiertes Polystyrol), z. B. Styropor (BASF) und/oder feinporigeren wie XPS (Extrudierter Polystyrol-Hartschaum), z. B. Styrodur^{®} (BASF). Bevorzugt sind Polystyrolschaumstoffe wie z. B. Austrotherm^{®} XPS, Styrofoam^{®} (Dow Chemical), Floormate^{®}, Jackodur^{®}, Lustron^{®}, Roofmate^{®}, Styropor, Styrodur^{®}, Styrofoam^{®}, Sagex^{®} und Telgopor^{®}.

Bevorzugt handelt es sich bei den Polymeren um Halogenhaltige Polymere, wie z. B. Polychloropren, Chlorkautschuk, chloriertes und bromiertes Copolymer aus Isobutylen-Isopren (Halobutylkautschuk), chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z. B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.

Bevorzugt handelt es sich bei den Polymeren um Polymere, die sich von alpha, beta -ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile und Copolymere der genannten Monomeren untereinander oder mit anderen ungesättigten Monomeren, wie z. B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.

Bevorzugt handelt es sich bei den Polymeren um Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit Olefinen.

Bevorzugt handelt es sich bei den Polymeren um Homo- und Copolymere von cyclischen Ethern, wie Polyalkylenglykole, Polyethylenoxyd, Polypropylenoxyd oder deren Copolymere mit Bisglycidylethern.

Bevorzugt handelt es sich bei den Polymeren um Polyacetale, wie Polyoxymethylen, sowie solche Polyoxymethylene, die Comonomere, wie z. B. Ethylenoxid, enthalten; Polyacetale, die mit thermoplastischen Polyurethanen, Acrylaten oder MBS modifiziert sind.

Bevorzugt handelt es sich bei den Polymeren um Polyphenylenoxide und -sulfide und deren Mischungen mit Styrolpolymeren oder Polyamiden.

Bevorzugt handelt es sich bei den Polymeren um Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.

Bevorzugt handelt es sich bei den Polymeren um Polyamide und Copolyamide, die sich von Diaminen und Dicarbonsäuren und/oder von Aminocarbonsäuren oder den entsprechenden Lactamen ableiten, wie Polyamid 2/12, Polyamid 4 (Poly-4-aminobuttersäure, Nylon^{®} 4, Fa. DuPont), Polyamid 4/6 (Poly(tetramethylen-adipamid), Poly-(tetramethylen-adipinsäurediamid), Nylon^{®} 4/6, Fa. DuPont), Polyamid 6 (Polycaprolactam, Poly-6-aminohexansäure, Nylon^{®} 6, Fa. DuPont, Akulon K122, Fa. DSM; Zytel^{®} 7301, Fa. DuPont; Durethan^{®} B 29, Fa. Bayer), Polyamid 6/6 ((Poly(N,N'-hexamethylenadipindiamid), Nylon^{®} 6/6 , Fa. DuPont, Zytel^{®} 101, Fa. DuPont; Durethan^{®} A30, Durethan^{®} AKV, Durethan^{®} AM, Fa. Bayer; Ultramid^{®} A3, Fa BASF), Polyamid 6/9 (Poly(hexamethylennonanediamid), Nylon^{®} 6/9 , Fa. DuPont), Polyamid 6/10 (Poly(hexamethylensebacamid), Nylon^{®} 6/10 , Fa. DuPont), Polyamid 6/12 (Poly(hexamethylendodecanediamid), Nylon^{®} 6/12 , Fa. DuPont), Polyamid 6/66 (Poly(hexamethylenadipamid-co-caprolactam), Nylon^{®} 6/66 , Fa. DuPont), Polyamid 7 (Poly-7-aminoheptansäure, Nylon^{®} 7, Fa. DuPont), Polyamid 7,7 (Polyheptamethylenpimelamid, Nylon^{®} 7,7, Fa. DuPont), Polyamid 8 (Poly-8-aminooctansäure, Nylon^{®} 8, Fa. DuPont), Polyamid 8,8 (Polyoctamethylensuberamid, Nylon^{®} 8,8, Fa. DuPont), Polyamid 9 (Poly-9-aminononansäure, Nylon^{®} 9, Fa. DuPont), Polyamid 9,9 (Polynonamethylenazelamid, Nylon^{®} 9,9, Fa. DuPont), Polyamid 10 (Poly-10-amino-decansäure, Nylon^{®} 10, Fa. DuPont), Polyamid 10,9 (Poly(decamethylenazelamid), Nylon^{®} 10,9, Fa. DuPont), Polyamid 10,10 (Polydecamethylensebacamid, Nylon^{®} 10,10, Fa. DuPont), Polyamid 11 (Poly-11-aminoundecansäure, Nylon^{®} 11, Fa. DuPont), Polyamid 12 (Polylauryllactam , Nylon^{®} 12 , Fa. DuPont, Grillamid^{®} L20, Fa. Ems Chemie), aromatische Polyamide ausgehend von m-Xylol, Diamin und Adipinsäure; Polyamide, hergestellt aus Hexamethylendiamin und Iso- und/oder Terephthalsäure (Polyhexamethylenisophthalamid Polyhexamethylenterephthalamid) und gegebenenfalls einem Elastomer als Modifikator, z. B. Poly-2,4,4-trimethylhexamethylenterephthalamid oder Poly-m-phenylenisophthalamid. Blockcopolymere der vorstehend genannten Polyamide mit Polyolefinen, Olefin-Copolymeren, lonomeren oder chemisch gebundenen oder gepfropften Elastomeren; oder mit Polyethern, wie z. B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

Bevorzugt handelt es sich bei den Polymeren um Polyharnstoffe, Polyimide, Polyamidimide, Polyetherimide, Polyesterimide, Polyhydantoine und Polybenzimidazole.

Bevorzugt handelt es sich bei den Polymeren um Polyester, die sich von Dicarbonsäuren und Dialkoholen und/oder von Hydroxycarbonsäuren oder den entsprechenden Lactonen ableiten, wie Polyethylenterephthalat, Polybutylenterephthalat^{®} (Celanex^{®} 2500, Celanex^{®} 2002, Fa Celanese; Ultradur^{®}, Fa. BASF), Poly-1,4-dimethylolcyclohexanterephthalat, Polyhydroxybenzoate, sowie Block-Polyetherester, die sich von Polyethern mit Hydroxylendgruppen ableiten; ferner mit Polycarbonaten oder MBS modifizierte Polyester.

Bevorzugt handelt es sich bei den Polymeren um Polycarbonate und Polyestercarbonate.

Bevorzugt handelt es sich bei den Polymeren um Polysulfone, Polyethersulfone und Polyetherketone.

Bevorzugt handelt es sich bei den Polymeren um vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

Bevorzugt handelt es sich bei den Polymeren um trocknende und nicht-trocknende Alkydharze.

Bevorzugt handelt es sich bei den Polymeren um ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.

Bevorzugt handelt es sich bei den Polymeren um vernetzbare Acrylharze, die sich von substituierten Acrylsäureestern ableiten, wie z.B. von Epoxyacrylaten, Urethanacrylaten oder Polyesteracrylaten.

Bevorzugt handelt es sich bei den Polymeren um Alkydharze, Polyesterharze und Acrylatharze, die mit Melaminharzen, Harnstoffharzen, Isocyanaten, Isocyanuraten, Polyisocyanaten oder Epoxidharzen vernetzt sind.

Bevorzugt handelt es sich bei den Polymeren um vernetzte Epoxidharze, die sich von aliphatischen, cycloaliphatischen, heterocyclischen oder aromatischen Glycidylverbindungen ableiten, z. B. Produkte von Bisphenol-A-diglycidylethern, Bisphenol-F-diglycidylethern, die mittels üblichen Härtern wie z. B. Anhydriden oder Aminen mit oder ohne Beschleunigern vernetzt werden.

Bevorzugt handelt es sich bei den Polymeren um Mischungen (Polyblends) der vorgenannten Polymeren, wie z. B. PP/EPDM (Polypropylen/ Ethylen-Propylen-Dien-Kautschuk), Polyamid/EPDM oder ABS (Polyamid/Ethylen-Propylen-DienKautschuk oder Acrylnitril-Butadien-Styrol), PVC/EVA (Polyvinylchlorid/ Ethylenvinylacetat), PVC/ABS (Polyvinylchlorid/Acrylnitril-Butadien-Styrol), PVC/MBS (Polyvinylchlorid/ Methacrylat-Butadien-Styrol), PC/ABS (Polycarbonat/Acrylnitril-Butadien-Styrol), PBTP/ABS (Polybutylenterephthalat /Acrylnitril-Butadien-Styrol), PC/ASA (Polycarbonat/Acrylester-Styrol-Acrylnitril), PC/PBT (Polycarbonat/Polybutylen-terephthalat), PVC/CPE (Polyvinylchlorid/chloriertes Polyethylen), PVC/Acrylate (Polyvinylchlorid/Acrylate, POM/thermoplastisches PUR (Polyoxymethylen / thermoplastisches Polyurethan), PC/thermoplastisches PUR (Polycarbonat / thermoplastisches Polyurethan), POM/Acrylat (Polyoxymethylen/Acrylat), POM/MBS (Polyoxymethylen/ Methacrylat-Butadien-Styrol), PPO/HIPS (Polyphenylenoxid /High impact polystyrol), PPO/PA 6.6 (Polyphenylenoxid /Polyamid 6.6) und Copolymere, PA/HDPE (Polyamid /High Density Polyethylen), PA/PP (Polyamid / Polyethylen), PA/PPO (Polyamid / Polyphenylenoxid), PBT/PC/ABS (Polybutylenterephthalat / Polycarbonat / Acrylnitril-Butadien-Styrol) und/ oder PBT/PET/PC (Polybutylenterephthalat / Polyethylenterephthalat / Polycarbonat).

Geeignete zur Herstellung von Polymerformmassen einsetzbare Compoundieraggregate sind Einwellenextruder bzw. Einschneckenextruder z. B. der Fa. Berstorff GmbH, Hannover und oder der Fa. Leistritz, Nürnberg.

Geeignete Compoundieraggregate sind Mehrzonenschnecken-Extruder mit Dreizonenschnecken und/oder Kurzkompressionsschnecken.

Geeignete Compoundieraggregate sind auch Ko-Kneter z. B. von Fa. Coperion Buss Compounding Systems, CH-Pratteln, z. B. MDK/E46-11D und/oder Laborkneter (MDK 46 der Firma Buss, Schweiz mit L=11D).

Geeignete Compoundieraggregate sind Doppelschneckenextruder z. B. der Fa. Coperion Werner & Pfleiderer GmbH & Co.KG, Stuttgart (ZSK 25, ZSK30, ZSK 40, ZSK 58, ZSK MEGAcompounder 40, 50, 58, 70, 92, 119, 177, 250, 320, 350, 380) und/oder der Fa. Berstorff GmbH, Hannover, Leistritz Extrusionstechnik GmbH, Nürnberg.

Einsetzbare Compoundieraggregate sind auch Ring-Extruder z. B. der Fa. 3+Extruder GmbH, Laufen mit einem Ring von drei bis zwölf kleinen Schnecken, die um einem statischen Kern rotieren und/oder Planetwalzenextruder z. B. der Fa. Entex, Bochum und/oder Entgasungs-Extruder und/oder Kaskadenextruder und/oder Maillefer-Schecken.

Geeignete Compoundieraggregate sind Compounder mit gegenläufiger Doppelschnecke z. B. Compex 37- bzw. -70-Typen der Fa. Krauss-Maffei Berstorff.

Wirksame Schneckenlängen (L) sind bei Einwellenextrudern bzw. Einschneckenextrudern 20 bis 40D und bei bei Mehrzonenschneckenextudern z. B. 25D mit Einzugzone (L=10D), Übergangszone (L=6D), Ausstoßzone (L=9D); bei Doppelschneckenextrudern 8 bis 48D.

Herstellung, Verarbeitung und Prüfung von flammgeschützten Kunststoffformmassen und Kunststoff-Formkörpern

Die Flammschutzkomponenten wurden mit dem Polymergranulat und evtl. Additiven vermischt und auf einem Doppelschnecken-Extruder (Typ Leistritz LSM 30/34) bei Temperaturen von 230 bis 260 °C (PBT-GV) bzw. von 260 bis 280 °C (PA 66-GV) eingearbeitet. Der homogenisierte Polymerstrang wurde abgezogen, im Wasserbad gekühlt und anschließend granuliert.

Nach ausreichender Trocknung wurden die Formmassen auf einer Spritzgießmaschine (Typ Aarburg Allrounder) bei Massetemperaturen von 240 bis 270 °C (PBT-GV) bzw. von 260 bis 290°C (PA 66-GV) zu Prüfkörpern verarbeitet.

An Prüfkörpern aus jeder Mischung wurden die Brandklasse UL 94 (Underwriter Laboratories) an Probekörpern der Dicke 1,5 mm bestimmt.

Nach UL 94 ergeben sich folgende Brandklassen:
V-0: kein Nachbrennen länger als 10 sec, Summe der Nachbrennzeiten bei 10 Beflammungen nicht grösser als 50 sec, kein brennendes Abtropfen, kein vollständiges Abbrennen der Probe, kein Nachglühen der Proben länger als 30 sec nach Beflammungsende
V-1: kein Nachbrennen länger als 30 sec nach Beflammungsende, Summe der Nachbrennzeiten bei 10 Beflammungen nicht grösser als 250 sec, kein Nachglühen der Proben länger als 60 sec nach Beflammungsende, übrige Kriterien wie bei V-0
V-2: Zündung der Watte durch brennendes Abtropfen, übrige Kriterien wie bei V-1 Nicht klassifizierbar (nkl) erfüllt nicht die Brandklasse V-2.

### Test der thermischen Stabilität und Phosphinbildung

Ein wichtiges Kriterium für die thermische Stabilität der erfindungsgemäßen Flammschutzmittel-Mischungen enthaltend Flammschutzmittel und Aluminiumphosphite ist die Temperatur bei der Zersetzung eintritt und giftiges PH₃ gebildet wird. Dessen Freisetzung muss bei der Herstellung von flammgeschützten Polymeren vermieden werden. Zur Bestimmung wird eine Materialprobe in einem Röhrenofen unter strömendem Stickstoff (30 l/g) erhitzt, indem die Temperatur stufenweise angehoben wird. Die Zersetzungstemperatur ist erreicht, wenn mit einem Nachweisröhrchen der Fa. Dräger mehr als 1 ppm PH₃ (Kurzzeitröhren auf Phosphorwasserstoff) nachgewiesen werden kann.

### Bestimmung des Kristallwassergehaltes (Restfeuchte)

Eine Probe wird in einem auf 300 °C geheizten Muffelofen der Fa. Nabertherm bis zur Gewichtskonstanz erhitzt. Dies dauert üblicherweise 15 min. Die Masse des Rückstandes bezogen auf die Einwaage ergibt, in Prozent gerechnet und von 100 subtrahiert, den Gewichtsverlust.

Die Erfindung wird durch die nachstehenden Beispiele erläutert.

### Beispiel 1 (Vergleich) Aluminiumphosphit der Formel (I)

573 g Aluminiumhydroxid, 1284 g 70 Gew.-%ige phosphorige Säure, 307 g 25 Gew.-%ige Schwefelsäure und 9.400 g vollentsalztes Wasser werden in einem 16 I-Hochdruckrührbehälter vorgelegt, auf 150 °C erhitzt und 2,5 h gerührt. Die entstandene Suspension wird abgelassen, bei 80 °C filtriert und mit vollentsalztem Wasser mehrfach gewaschen, dann bei 220 °C getrocknet. In sehr hoher Ausbeute (99 %) wird Aluminiumphosphit der Formel (I) mit sehr hoher thermischer Stabilität (PH₃-Bildung ab 360 °C) erhalten.

### Beispiel 2 (Vergleich) Aluminiumphosphit der Formel (I)

Wie in Beispiel 1 werden 593 g Aluminiumhydroxid, 1330 g 70 Gew.-%ige phosphorige Säure, 318 g 25 Gew.-%ige Schwefelsäure und 9 Liter vollentsalztes Wasser vorgelegt, auf 145 °C erhitzt und 3 h gerührt, dann 605 g 25 Gew.-%ige Natronlauge zugegeben und 1,5 h gerührt. Wie in Beispiel 1 wird die Suspension abgelassen, filtriert, gewaschen und getrocknet. In sehr hoher Ausbeute (99 %) wird Aluminiumphosphit der Formel (I) mit sehr hoher thermischer Stabilität (PH₃-Bildung ab 380 °C) erhalten.

### Beispiel 3 Aluminiumphosphit der Formel (II)

2958 g Wasser werden in einem 16 I-Hochdruckrührbehälter vorgelegt, auf 155 °C erhitzt und gerührt. Während 3 h werden gleichzeitig 3362 g Aluminiumsulfat-Lösung und 2780 g Natriumphosphit-Lösung zudosiert. Die Suspension wird abgelassen und bei 80 °C filtriert, mit heißem Wasser gewaschen, redispergiert und nochmals gewaschen. Der Filterkuchen wird in einem Reaktortherm-Trockner bei 220 °C getrocknet. In sehr hoher Ausbeute wird ein erfindungsgemäßes Alkali-Aluminium-Mischphosphit mit sehr hoher thermischer Stabilität (PH₃-Bildung ab 380 °C) erhalten.

### Beispiel 4 Aluminiumphosphit der Formel (II)

Analog zu Beispiel 3 wird bei 155 °C Wasser vorgelegt und innerhalb 0,5 h Aluminiumsulfat- und Natriumphosphitlösung zudosiert. Die Ausbeute beträgt 85 % und die thermische Stabilität (PH₃-Bildung ab 360 °C) des Produkts ist sehr hoch.

### Beispiel 5 Aluminiumphosphit der Formel (III)

1644 g Aluminiumhydroxid (Hydral^{®} 710; Fa. ALCOA; 99,6 %ig) werden in einem Kneter vorgelegt. Unter Mischen werden portionsweise 2635 g phosphorige Säure (98 %ig) dazugegeben. Spontan tritt eine Reaktion unter Wärmeentwicklung ein. Man lässt weitere 5 h bei 145 °C reagieren. Man erhält in 99,5 % Ausbeute Aluminiumhydrogenphosphit der Zusammensetzung Al₂(HPO₃)_{2,89} (H₂PO₃)_{0,22}. Die thermische Stabilität ist sehr hoch (PH₃-Bildung ab 360 °C).

### Beispiel 6 Aluminiumphosphit der Formel (III)

Wie in Beispiel 5 werden 1537 g Aluminiumhydroxid und 2463 g phosphorige Säure umgesetzt. Das Produkt enthält Aluminiumhydrogenphosphit der Zusammensetzung Al₂(HPO₃)₂ (H₂PO₃)₂, und 0,45 % phosphorige Säure. Die Ausbeute ist 90,5 %. Die thermische Stabilität ist sehr hoch (PH₃-Bildung ab 360 °C).

### Beispiel 7 Mischung von Aluminiumphosphit der Formel (III) mit Aluminiumsalz

1600 g Aluminiumhydroxid (Hydral^{®} 710; Fa. ALCOA; 99,6 %ig) werden in einem Kneter vorgelegt. Unter Mischen werden portionsweise 2570 g phosphorige Säure (98 %ig) dazugegeben. Spontan tritt eine Reaktion unter Wärmeentwicklung ein. Man lässt weitere 160 Minuten h bei 148 °C reagieren. Das Produkt enthält 98,1 Gew.-% Aluminiumphosphit der Zusammensetzung Al₂(HPO₃)_{2,89} (H₂PO₃)_{0,22}, 1,5 Gew.-% Aluminiumhydroxid und 0,25 Gew.-% nicht umgesetzte phosphorige Säure.

### Beispiel 8 Mischung von Aluminiumphosphit der Formel (III) mit Aluminiumsalz

Wie in Beispiel 7 werden 1600 g Aluminiumhydroxid und 2570 g phosphorige Säure umgesetzt. Das Produkt enthält 90,8 Gew.-% Aluminiumphosphit der Zusammensetzung Al₂(HPO₃)₂ (H₂PO₃)₂, 8,7 Gew.-% Aluminiumhydroxid und 0,4 Gew-% phosphorige Säure.

### Beispiel 9 Mischungen von Aluminiumphosphit der Formel (I) mit schwerlöslichen Aluminiumsalzen und stickstofffreien Fremdionen

606 g Aluminiumhydroxid, 1360 g 70 Gew.-%ige phosphorige Säure, 325 g 25 Gew.-%ige Schwefelsäure und 10 Liter vollentsalztes Wasser werden in einem 16 I-Hochdruckrührbehälter der Fa. Pfaudler vorgelegt, auf 155 °C erhitzt und 170 Minuten gerührt. Die entstandene Suspension wird abgelassen, mittels Seitz-Druckfilter bei 80 °C filtriert und mehrfach mit vollentsalztem Wasser gewaschen und redispergiert, dann bei 150 °C getrocknet. In sehr hoher Ausbeute (99 %) wird eine erfindungsgemäße Mischung von Aluminiumphosphit der Formel (II) mit schwerlöslichen Aluminiumsalzen (1,3 Gew.-% Aluminiumhydroxid) und stickstofffreien Fremdionen (0,1 Gew.-% Sulfat) mit sehr hoher thermischer Stabilität (PH₃-Bildung ab 360 °C) erhalten.

### Beispiel 10 Mischungen von Aluminiumphosphit der Formel (I) mit schwerlöslichen Aluminiumsalzen und stickstofffreien Fremdionen

Wie in Beispiel 9 werden 634 g Aluminiumhydroxid, 1420 g 70 Gew.-%ige phosphorige Säure, 340 g 25 Gew.-%ige Schwefelsäure und 10 Liter vollentsalztes Wasser vorgelegt, auf 125 °C erhitzt und 3 h gerührt, dann 646 g 25 Gew.-%ige Natronlauge zugegeben und 80 Minuten. Wie in Beispiel 9 wird die Suspension abgelassen, filtriert, gewaschen und getrocknet. In sehr hoher Ausbeute (98,9 %) wird eine erfindungsgemäße Mischung von Aluminiumphosphit der Formel (III) mit schwerlöslichen Aluminiumsalzen(3 Gew.-% Aluminiumhydroxid) und stickstofffreien Fremdionen (0,3 Gew.-% Natrium, 0,1 Gew.-% Sulfat) mit sehr hoher thermischer Stabilität (PH₃-Bildung ab 380 °C) erhalten.

### Beispiel 11 (Vergleich)

Nicht erfindungsgemäßes, käufliches Aluminumphosphit zeigt im Vergleich eine geringere thermische Stabiltät (PH₃-Bildung ab 320 °C).

### Beispiel 12 (Vergleich) Aluminiumphosphit der Formel (I) in Polyamid

Mit 52 Gew.-% Polyamid 66-Polymer, 28 Gew.-% Glasfasern, 3,9 Gew.-% Aluminiumphosphit nach Beispiel 1 und 16,1 Gew.-% Aluminiumdiethylphosphinat Exolit^{®} OP1230 (Fa. Clariant) werden nach den genannten allgemeinen Vorschriften flammgeschützte Polymerformmassen und flammgeschützte Polymerformkörper in Form von UL-94-Probestäben hergestellt. Der UL-94-Test ergibt V-0-Klassifizierung.

### Beispiel 13 (Vergleich) Aluminiumphosphit der Formel (I) in Polyester

Mit 52 Gew.-% Polybutylenterephthalat-Polymer, 28 Gew.-% Glasfasern, 3,9 Gew.-% Aluminiumphosphit nach Beispiel 1 und 16,1 Gew.-% Aluminiumdiethylphosphinat Exolit^{®} OP1240 (Fa. Clariant) werden nach den genannten allgemeinen Vorschriften flammgeschützte Polymerformmassen und flammgeschützte Polymerformkörper in Form von UL-94-Probestäben hergestellt. Der UL-94-Test ergibt V-0-Klassifizierung.

### Beispiel 14 Aluminiumphosphit der Formel (II) in Polyamid

Mit 52 Gew.-% Polyamid 66-Polymer, 28 Gew.-% Glasfasern, 3,9 Gew.-% Aluminiumphosphit nach Beispiel 3 und 16,1 Gew.-% Aluminiumdiethylphosphinat Exolit^{®} OP1230 (Fa. Clariant) werden nach den genannten allgemeinen Vorschriften flammgeschützte Polymerformmassen und flammgeschützte Polymerformkörper in Form von UL-94-Probestäben hergestellt. Der UL-94-Test ergibt V-0-Klassifizierung.

### Beispiel 15 Aluminiumphosphit der Formel (II) in Polyester

Mit 52 Gew.-% Polybutylenterephthalat-Polymer, 28 Gew.-% Glasfasern, 3,9 Gew.-% Aluminiumphosphit nach Beispiel 3 und 16,1 Gew.-% Aluminiumdiethylphosphinat Exolit^{®} OP1240 (Fa. Clariant) werden nach den genannten allgemeinen Vorschriften flammgeschützte Polymerformmassen und flammgeschützte Polymerformkörper in Form von UL-94-Probestäben hergestellt. Der UL-94-Test ergibt V-0-Klassifizierung.

### Beispiel 16 Aluminiumphosphit der Formel (III) in Polyamid

Mit 52 Gew.-% Polyamid 66-Polymer, 28 Gew.-% Glasfasern, 3,9 Gew.-% Aluminiumphosphit nach Beispiel 5 und 16,1 Gew.-% Aluminiumdiethylphosphinat Exolit^{®} OP1230 (Fa. Clariant) werden nach den genannten allgemeinen Vorschriften flammgeschützte Polymerformmassen und flammgeschützte Polymerformkörper in Form von UL-94-Probestäben hergestellt. Der UL-94-Test ergibt V-0-Klassifizierung.

### Beispiel 17 Aluminiumphosphit der Formel (II) in Polyester

Mit 52 Gew.-% Polybutylenterephthalat-Polymer, 28 Gew.-% Glasfasern, 3,9 Gew.-% Aluminiumphosphit nach Beispiel 5 und 16,1 Gew.-% Aluminiumdiethylphosphinat Exolit^{®} OP1240 (Fa. Clariant) werden nach den genannten allgemeinen Vorschriften flammgeschützte Polymerformmassen und flammgeschützte Polymerformkörper in Form von UL-94-Probestäben hergestellt. Der UL-94-Test ergibt V-0-Klassifizierung.

### Beispiel 18 Mischung von Aluminiumsalz und Aluminium-Hydrogenphosphit der Formel (III) in Polyamid

Mit 52 Gew.-% Polyamid 66-Polymer, 28 Gew.-% Glasfasern, 3,9 Gew.-% einer Mischung von Aluminiumsalz und Aluminium-Hydrogenphosphit der Formel (III) nach Beispiel 7 und 16,1 Gew.-% Aluminumdiethylphosphinat Exolit^{®} OP1230 (Fa. Clariant) werden nach den genannten allgemeinen Vorschriften flammgeschützte Polymerformmassen und flammgeschützte Polymerformkörper in Form von UL-94-Probestäben hergestellt. Der UL-94-Test ergibt V-0-Klassifizierung.

### Beispiel 19 Mischung von Aluminiumsalz und Aluminium-Hydrogenphosphit der Formel (III) in Polyester

Mit 52 Gew.-% Polybutylenterephthalat-Polymer, 28 Gew.-% Glasfasern, 3,9 Gew.-% einer Mischung von Aluminiumsalz mit Aluminiumphosphit der Formel (III) nach Beispiel 7 und 16,1 Gew.-% Aluminumdiethylphosphinat Exolit^{®} OP1240 (Fa. Clariant) werden nach den genannten allgemeinen Vorschriften flammgeschützte Polymerformmassen und flammgeschützte Polymerformkörper in Form von UL-94-Probestäben hergestellt. Der UL-94-Test ergibt V-0-Klassifizierung.

### Beispiel 20

Mit 52 Gew.-% Polyamid 66-Polymer, 28 Gew.-% Glasfasern, 3,9 Gew.-% erfindungsgemäße Mischung von Aluminiumphosphit der Formel (I) mit schwerlöslichen Aluminiumsalzen und stickstofffreien Fremdionen nach Beispiel 9 und 16,1 Gew.-% Aluminiumdiethylphosphinat Exolit^{®} OP1230 (Fa. Clariant) werden nach den genannten allgemeinen Vorschriften flammgeschützte Polymerformmassen und flammgeschützte Polymerformkörper in Form von UL-94-Probestäben hergestellt. Der UL-94-Test ergibt V-0-Klassifizierung.

### Beispiel 21

Mit 52 Gew.-% Polybutylenterephthalat-Polymer, 28 Gew.-% Glasfasern, 3,9 Gew.-% erfindungsgemäße Mischung von Aluminiumphosphit der Formel (I) mit schwerlöslichen Aluminiumsalzen und stickstofffreien Fremdionen nach Beispiel 10 und 16,1 Gew.-% Aluminiumdiethylphosphinat Exolit^{®} OP1240 (Fa. Clariant) werden nach den genannten allgemeinen Vorschriften flammgeschützte Polymerformmassen und flammgeschützte Polymerformkörper in Form von UL-94-Probestäben hergestellt. Der UL-94-Test ergibt V-0-Klassifizierung.

### Beispiel 22 (Vergleich)

Mit 52 Gew.-% Polybutylenterephthalat-Polymer, 28 Gew.-% Glasfasern, 3,9 Gew.-% Aluminiumphosphit aus Beispiel 11 und 16,1 Gew.-% Aluminiumdiethylphosphinat Exolit^{®} OP1240 (Fa. Clariant) ist wegen der Bildung von toxischem Phosphin eine Verarbeitung zu flammgeschützte Polymerformmassen und flammgeschützte Polymerformkörper in Form von UL-94-Probestäben nicht möglich.

## Patentansprüche

1. Flammschutzmittel-Mischungen enthaltend Flammschutzmittel und Aluminiumphosphite, wobei es sich bei den Aluminiumphosphiten um solche der Formeln (II) und/oder (III)
Al_{2,00}M_{z}(HPO₃)y(OH)ᵥ x (H₂O)_{w} (II)
in der
M Alkalimetallionen
z 0,01 bis 1,5
y 2,63 bis 3,5
v 0 bis 2 und
w 0 bis 4
bedeutet,
Al_{2,00}(HPO₃)ᵤ(H₂PO₃)ₜ x (H2O)ₛ (III)
in der
u 2 bis 2,99
t 2 bis 0,01 und
s 0 bis 4
bedeutet,
und/oder um Mischungen von Aluminiumphosphit der Formel (III) mit Aluminiumsalzen handelt.

2. Flammschutzmittel-Mischungen nach Anspruch 1, **dadurch gekennzeichnet, dass** es sich bei dem Flammschutzmittel um Dialkylphosphinsäuren und/oder deren Salze; um Kondensationsprodukte des Melamins und/oder Umsetzungsprodukte des Melamins mit Phosphorsäure und/oder um Umsetzungsprodukte von Kondensationsprodukten des Melamins mit Polyphosphorsäure oder Gemischen davon; um stickstoffhaltige Phosphate der Formeln (NH₄)_{y} H₃-_{y} PO₄ bzw. (NH₄ PO₃)_{z}, mit y gleich 1 bis 3 und z gleich 1 bis 10.000; um Benzoguanamin, Tris(hydroxyethyl)isocyanurat, Allantoin, Glycouril, Melamin, Melamincyanurat, Dicyandiamid und/oder Guanidin; um Magnesiumoxid, Calciumoxid, Aluminiumoxid, Zinkoxid, Manganoxid, Zinnoxid, Aluminiumhydroxid, Böhmit, Dihydrotalcit, Hydrocalumit, Magnesiumhydroxid, Calciumhydroxid, Zinkhydroxid, Zinnoxidhydrat, Manganhydroxid, Zinkborat, basisches Zink-Silikat und/oder Zinkstannat handelt.

3. Flammschutzmittel-Mischungen nach Anspruch 1 oder 2, **dadurch gekennzeichnet, dass** die Dialkylphosphinsäuren oder deren Salze der Formel (IV) 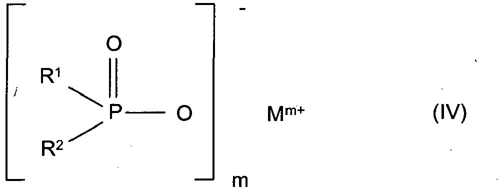 entsprechen, worin
R¹, R² gleich oder verschieden sind und C₁-C₆-Alkyl, linear oder verzweigt;
M Mg, Ca, Al, Sb, Sn, Ge, Ti, Fe, Zr, Zn, Ce, Bi, Sr, Mn, Li, Na, K, H und/oder eine protonierte Stickstoffbase ;
m 1 bis 4 bedeuten.

4. Flammschutzmittel-Mischungen nach einem oder mehreren der Ansprüche 1 bis 3, **dadurch gekennzeichnet, dass** es sich bei dem Flammschutzmittel um Melam, Melem, Melon, Dimelaminpyrophosphat, Melaminpolyphosphat, Melampolyphosphat, Melonpolyphosphat und/oder Melempolyphosphat und/oder gemischte Polysalze davon und/oder um Ammoniumhydrogenphosphat, Ammoniumdihydrogenphosphat und/oder Ammoniumpolyphosphat handelt.

5. Flammschutzmittel-Mischungen nach einem oder mehreren der Ansprüche 1 bis 3, **dadurch gekennzeichnet, dass** es sich bei dem Flammschutzmittel um Aluminiumhypophosphit, Zinkhypophosphit, Calciumhypophosphit, Natriumphosphit. Monophenylphosphinsäure und deren Salze, Mischungen von Dialkylphosphinsäuren und deren Salzen und Monoalkylphosphinsäuren und deren Salzen, 2-Carboxyethyl-alkylphosphinsäure und deren Salze, 2-Carboxyethyl-methylphosphinsäure und deren Salze, 2-Carboxyethylarylphosphinsäure und deren Salze, 2-Carboxyethyl-phenylphosphinsäure und deren Salze, Oxa-10-phosphaphenanthrene (DOPO) und dessen Salze und Addukte an para-Benzochinon bzw. Itaconsäure und/oder deren Salze handelt.

6. Flammschutzmittel-Mischungen nach einem oder mehreren der Ansprüche 1 bis 5, **dadurch gekennzeichnet, dass** beim Aluminiumphosphit der Formel (II) z 0,15 bis 0,4, y 2,80 bis 3 v 0,1 bis 0,4 und w 0,01 bis 0,1 bedeutet.

7. Flammschutzmittel-Mischungen nach einem oder mehreren der Ansprüche 1 bis 5, **dadurch gekennzeichnet, dass** beim Aluminiumphosphit der Formel (III) u 2,834 bis 2,99, t 0,332 bis 0,03 und s 0,01 bis 0,1 bedeutet.

8. Flammschutzmittel-Mischungen nach einem oder mehreren der Ansprüche 1 bis 7, enthaltend 0,1 bis 99,9 Gew.-% Flammschutzmittel und 0,1 bis 99,9 Gew.-% Aluminiumphosphite der Formeln (II) und/oder (III) und/oder Mischungen von Aluminiumphosphit der Formel (III) mit Aluminiumsalzen .

9. Flammschutzmittel-Mischungen nach einem oder mehreren der Ansprüche 1 bis 8, enthaltend 50 bis 99,9 Gew.-% Flammschutzmittel und 0,1 bis 50 Gew.-% Aluminiumphosphite der Formeln (II) und/oder (III) und/oder Mischungen von Aluminiumphosphit der Formel (III) mit Aluminiumsalzen

10. Verfahren zur Herstellung von Flammschutzmittel-Mischungen nach einem oder mehreren der Ansprüche 1 bis 9, **dadurch gekennzeichnet, dass** man pulverförmige Flammschutzmittel mit pulverförmige Aluminiumphosphiten der Formeln (II) und/oder (III) und/oder Mischungen von Aluminiumphosphit der Formel (III) mit Aluminiumsalzen mischt.

11. Verwendung von Flammschutzmittel-Mischungen nach einem oder mehreren der Ansprüche 1 bis 9 als Zwischenprodukt für weitere Synthesen, als Binder, als Vernetzer bzw. Beschleuniger beim Aushärten von Epoxyharzen, Polyurethanen, ungesättigten Polyesterharzen, als Polymerstabilisatoren, als Pflanzenschutzmittel, als Sequestrierungsmittel, als Mineralöl-Additiv, als Korrosionsschutzmittel, in Wasch- und Reinigungsmittelanwendungen, in Elektronikanwendungen.

12. Verwendung von Flammschutzmittel-Mischungen nach einem oder mehreren der Ansprüche 1 bis 9 in oder als Flammschutzmittel, insbesondere in oder als Flammschutzmittel für Klarlacke und Intumeszenzbeschichtungen, in oder als Flammschutzmittel für Holz und andere cellulosehaltige Produkte, in oder als reaktive und/oder nicht reaktive Flammschutzmittel für Polymere, zur Herstellung von flammgeschützten Polymerformmassen, zur Herstellung von flammgeschützten Polymerformkörpern und/oder zum flammhemmend Ausrüsten von Polyester und Cellulose-Rein- und Mischgeweben durch Imprägnierung und/oder als Synergist und/oder als Synergist in weiteren Flammschutzmittel-Mischungen.

13. Flammgeschützte thermoplastische oder duroplastische Polymerformmasse, Polymer-Formkörper, -Filme, -Fäden und/oder -Fasern, enthaltend 0,1 bis 45 Gew.-% Flammschutzmittel-Mischungen nach einem oder mehreren der Ansprüche 1 bis 9, 55 bis 99,9 Gew.-% thermoplastisches oder duroplastisches Polymer oder Mischungen derselben, 0 bis 55 Gew.-% Additive und 0 bis 55 Gew.-% Füllstoff bzw. Verstärkungsmaterialien, wobei die Summe der Komponenten 100 Gew.-% beträgt.

14. Flammgeschützte thermoplastische oder duroplastische Polymerformmasse, Polymer-Formkörper, Filme, -Fäden und/oder -Fasern, enthaltend 1 bis 30 Gew.-% Flammschutzmittel-Mischungen nach einem oder mehreren der Ansprüche 1 bis 9, 10 bis 97 Gew.-% thermoplastisches oder duroplastisches Polymer oder Mischungen derselben, 1 bis 30 Gew.-% Additive und 1 bis 30 Gew.-% Füllstoff bzw. Verstärkungsmaterialien, wobei die Summe der Komponenten 100 Gew. % beträgt.

15. Flammgeschützte thermoplastische oder duroplastische Polymerformmasse, Polymer-Formkörper, -Filme, -Fäden und/oder -Fasern, enthaltend Flammschutzmittel-Mischungen nach einem oder mehreren der Ansprüche 1 bis 9, **dadurch gekennzeichnet, dass** es sich bei dem Kunststoff um thermoplastische Polymere der Art Polystyrol-Hl (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol) oder PPE/HIPS (Polyphenylenether/Polystyrol-HI) Kunststoffe und/oder um duroplastische Polymere der Art ungesättigter Polyester oder Epoxidharze handelt.

## Claims

1. Flame retardant mixtures comprising flame retardant and aluminium phosphites, wherein the aluminium phosphites are those of the formulae (II) and/or (III)
Al_{2.00}M_{z}(HPO₃)_{y}(OH)ᵥ x (H₂O)_{w} (II)
in which
M represents alkali metal ions
z is 0.01 to 1.5
y is 2.63 to 3.5
v is 0 to 2 and
w is 0 to 4,
Al_{2.00}(HPO₃)ᵤ(H₂PO₃)ₜ x (H2O)ₛ (III)
in which
u is 2 to 2.99,
t is 2 to 0.01 and
s is 0 to 4,
and/or mixtures of aluminium phosphite of the formula (III) with aluminium salts.

2. Flame retardant mixtures according to Claim 1, **characterized in that** the flame retardant comprises dialkylphosphinic acids and/or salts thereof; condensation products of melamine and/or reaction products of melamine with phosphoric acid and/or reaction products of condensation products of melamine with polyphosphoric acid or mixtures thereof; nitrogen-containing phosphates of the formulae (NH₄)_{y} H₃-_{y} PO₄ and (NH₄ PO₃)_{z}, where y is 1 to 3 and z is 1 to 10 000; benzoguanamine, tris(hydroxyethyl) isocyanurate, allantoin, glycoluril, melamine, melamine cyanurate, dicyandiamide and/or guanidine; magnesium oxide, calcium oxide, aluminium oxide, zinc oxide, manganese oxide, tin oxide, aluminium hydroxide, boehmite, dihydrotalcite, hydrocalumite, magnesium hydroxide, calcium hydroxide, zinc hydroxide, tin oxide hydrate, manganese hydroxide, zinc borate, basic zinc silicate and/or zinc stannate.

3. Flame retardant mixtures according to Claim 1 or 2, **characterized in that** the dialkylphosphinic acids or salts thereof correspond to the formula (IV) 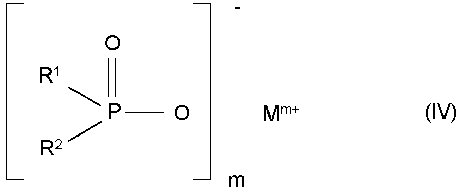 in which
R¹, R² are the same or different and are each linear or branched C₁-C₆-alkyl;
M is Mg, Ca, Al, Sb, Sn, Ge, Ti, Fe, Zr, Zn, Ce, Bi, Sr, Mn, Li, Na, K, H and/or a protonated nitrogen base;
m is 1 to 4.

4. Flame retardant mixtures according to one or more of Claims 1 to 3, **characterized in that** the flame retardant comprises melam, melem, melon, dimelamine pyrophosphate, melamine polyphosphate, melam polyphosphate, melon polyphosphate and/or melem polyphosphate and/or mixed poly salts thereof and/or ammonium hydrogenphosphate, ammonium dihydrogenphosphate and/or ammonium polyphosphate.

5. Flame retardant mixtures according to one or more of Claims 1 to 3, **characterized in that** the flame retardant comprises aluminium hypophosphite, zinc hypophosphite, calcium hypophosphite, sodium phosphite, monophenylphosphinic acid and salts thereof, mixtures of dialkylphosphinic acids and salts thereof and monoalkylphosphinic acids and salts thereof, 2-carboxyethylalkylphosphinic acid and salts thereof, 2-carboxyethylmethylphosphinic acid and salts thereof, 2-carboxyethylarylphosphinic acid and salts thereof, 2-carboxyethylphenylphosphinic acid and salts thereof, oxa-10-phosphaphenanthrene (DOPO) and salts thereof and adducts onto para-benzoquinone, or itaconic acid and/or salts thereof.

6. Flame retardant mixtures according to one or more of Claims 1 to 5, **characterized in that** z in the aluminium phosphite of the formula (II) is 0.15 to 0.4, y is 2.80 to 3, v is 0.1 to 0.4 and w is 0.01 to 0.1.

7. Flame retardant mixtures according to one or more of Claims 1 to 5, **characterized in that** u in the aluminium phosphite of the formula (III) is 2.834 to 2.99, t is 0.332 to 0.03 and s is 0.01 to 0.1.

8. Flame retardant mixtures according to one or more of Claims 1 to 7, comprising 0.1 to 99.9% by weight of flame retardant and 0.1 to 99.9% by weight of aluminium phosphites of the formulae (II) and/or (III) and/or mixtures of aluminium phosphite of the formula (III) with aluminium salts.

9. Flame retardant mixtures according to one or more of Claims 1 to 8, comprising 50 to 99.9% by weight of flame retardant and 0.1 to 50% by weight of aluminium phosphites of the formulae (II) and/or (III) and/or mixtures of aluminium phosphite of the formula (III) with aluminium salts.

10. Process for preparing flame retardant mixtures according to one or more of Claims 1 to 9, **characterized in that** pulverulent flame retardants are mixed with pulverulent aluminium phosphites of the formulae (II) and/or (III) and/or mixtures of aluminium phosphite of the formula (III) with aluminium salts.

11. Use of flame retardant mixtures according to one or more of Claims 1 to 9 as an intermediate for further syntheses, as a binder, as a crosslinker or accelerator in the curing of epoxy resins, polyurethanes, unsaturated polyester resins, as polymer stabilizers, as crop protection compositions, as sequestrants, as a mineral oil additive, as an anticorrosive, in washing and cleaning composition applications, in electronics applications.

12. Use of flame retardant mixtures according to one or more of Claims 1 to 9 in or as a flame retardant, especially in or as a flame retardant for clearcoats and intumescent coatings, in or as a flame retardant for wood and other cellulosic products, in or as a reactive and/or nonreactive flame retardant for polymers, for production of flame-retardant polymer molding compositions, for production of flame-retardant polymer moldings and/or for rendering polyester and pure and blended cellulose fabrics flame-retardant by impregnation, and/or as a synergist and/or as a synergist in further flame retardant mixtures.

13. Flame-retardant thermoplastic or thermoset polymer molding compositions or polymer moldings, films, filaments and/or fibres comprising 0.1 to 45% by weight of flame retardant mixtures according to one or more of Claims 1 to 9, 55 to 99.9% by weight of thermoplastic or thermoset polymer or mixtures thereof, 0 to 55% by weight of additives and 0 to 55% by weight of filler or reinforcing materials, where the sum of the components is 100% by weight.

14. Flame-retardant thermoplastic or thermoset polymer molding compositions or polymer moldings, films, filaments and/or fibres comprising 1 to 30% by weight of flame retardant mixtures according to one or more of Claims 1 to 9, 10 to 97% by weight of thermoplastic or thermoset polymer or mixtures thereof, 1 to 30% by weight of additives and 1 to 30% by weight of filler or reinforcing materials, where the sum of the components is 100% by weight.

15. Flame-retardant thermoplastic or thermoset polymer molding compositions or polymer moldings, films, filaments and/or fibres comprising flame retardant mixtures according to one or more of Claims 1 to 9, **characterized in that** the polymer comprises thermoplastic polymers of the HI (high-impact) polystyrene, polyphenylene ether, polyamide, polyester or polycarbonate type, and blends or polymer blends of the ABS (acrylonitrile-butadiene-styrene) or PC/ABS (polycarbonate/acrylonitrile-butadiene-styrene) or PPE/HIPS (polyphenylene ether/HI polystyrene) polymer type, and/or thermoset polymers of the unsaturated polyester or epoxy resin type.

## Revendications

1. Mélanges d'agents ignifuges, contenant des agents ignifuges et des phosphites d'aluminium, les phosphites d'aluminium étant ceux des formules (II) et/ou (III)
Al_{2,00}M_{z}(HPO₃)_{y}(OH)ᵥ x (H₂O)_{w} (II)
dans laquelle
M signifie des ions de métal alcalin
z signifie 0,01 à 1,5
y signifie 2,63 à 3,5
v signifie 0 à 2 et
w signifie 0 à 4,
**Al_{2,00}(HPO₃)ᵤ(H₂PO₃)ₜ x (H₂O)ₛ** **(III)**
dans laquelle
u signifie 2 à 2,99
t signifie 2 à 0,01 et
s signifie 0 à 4,
et/ou des mélanges de phosphite d'aluminium de formule (III) avec des sels d'aluminium.

2. Mélanges d'agents ignifuges selon la revendication 1, **caractérisés en ce qu'**il s'agit, pour l'agent ignifuge, d'acides dialkylphosphiniques et/ou de leurs sels ; de produits de condensation de la mélamine et/ou de produits de transformation de la mélamine avec de l'acide phosphorique et/ou de produits de transformation de produits de condensation de la mélamine avec du poly(acide phosphorique) ou de mélanges de ceux-ci ; de phosphates contenant de l'azote des formules (NH₄)_{y}H_{3-y}PO₄ ou (NH₄PO₃)_{z}, y valant 1 à 3 et z valant 1 à 10.000 ; de benzoguanamine, d'isocyanurate de tris(hydroxyéthyle), d'allantoine, de glyco-urile, de mélamine, de cyanurate de mélamine, de dicyanodiamide et/ou de guanidine ; d'oxyde de magnésium, d'oxyde de calcium, d'oxyde d'aluminium, d'oxyde de zinc, d'oxyde de manganèse, d'oxyde d'étain, d'hydroxyde d'aluminium, de boehmite, de dihydrotalcite, d'hydrocalumite, d'hydroxyde de magnésium, d'hydroxyde de calcium, d'hydroxyde de zinc, d'oxyde d'étain hydraté, d'hydroxyde de manganèse, de borate de zinc, de silicate de zinc basique et/ou de stannate de zinc.

3. Mélanges d'agents ignifuges selon la revendication 1 ou 2, **caractérisés en ce que** les acides dialkylphosphiniques ou leurs sels correspondent à la formule (IV) 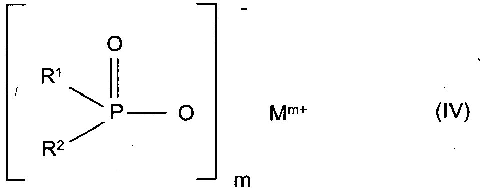 dans laquelle
R¹, R² sont identiques ou différents et signifient C₁-C₆-alkyle, linéaire ou ramifié ;
M signifie Mg, Ca, Al, Sb, Sn, Ge, Ti, Fe, Zr, Zn, Ce, Bi, Sr, Mn, Li, Na, K, H et/ou une base azotée protonée ;
m signifie 1 à 4.

4. Mélanges d'agents ignifuges selon l'une ou plusieurs des revendications 1 à 3, **caractérisés en ce qu'**il s'agit, pour l'agent ignifuge, de mélam, de mélem, de mélon, de pyrophosphate de dimélamine, de polyphosphate de mélamine, de polyphosphate de mélam, de polyphosphate de mélon et/ou de polyphosphate de mélem et/ou de polysels mixtes de ceux-ci et/ou d'hydrogénophosphate d'ammonium, de dihydrogénophosphate d'ammonium et/ou de polyphosphate d'ammonium.

5. Mélanges d'agents ignifuges selon l'une ou plusieurs des revendications 1 à 3, **caractérisés en ce qu'**il s'agit, pour l'agent ignifuge, d'hypophosphite d'aluminium, d'hypophosphite de zinc, d'hypophosphite de calcium, de phosphite de sodium, d'acide monophénylphosphinique et de ses sels, de mélanges d'acides dialkylphosphiniques et de leurs sels avec des acides monoalkylphosphiniques et leurs sels, d'acide 2-carboxyéthylalkylphosphinique et de ses sels, d'acide 2-carboxyéthylméthylphosphinique et de ses sels, d'acide 2-carboxyéthylarylphosphinique et de ses sels, d'acide 2-carboxyéthylphénylphosphinique et de ses sels, d'oxa-10-phosphaphénanthrène (DOPO) et de ses sels et de produits d'addition sur de la para-benzoquinone ou sur de l'acide itaconique et/ou de leurs sels.

6. Mélanges d'agents ignifuges selon l'une ou plusieurs des revendications 1 à 5, **caractérisés en ce que** dans le phosphite d'aluminium de formule (II), z signifie 0,15 à 0,4, y signifie 2,80 à 3, v signifie 0,1 à 0,4 et w signifie 0,01 à 0,1.

7. Mélanges d'agents ignifuges selon l'une ou plusieurs des revendications 1 à 5, **caractérisés en ce que** dans le phosphite d'aluminium de formule (III), u signifie 2,834 à 2,99, t signifie 0,332 à 0,03 et s signifie 0,01 à 0,1.

8. Mélanges d'agents ignifuges selon l'une ou plusieurs des revendications 1 à 7, contenant 0,1 à 99,9% en poids d'agents ignifuges et 0,1 à 99,9% en poids de phosphites d'aluminium des formules (II) et/ou (III) et/ou de mélanges de phosphite d'aluminium de formule (III) avec des sels d'aluminium.

9. Mélanges d'agents ignifuges selon l'une ou plusieurs des revendications 1 à 8, contenant 50 à 99,9% en poids d'agents ignifuges et 0,1 à 50% en poids de phosphites d'aluminium des formules (II) et/ou (III) et/ou de mélanges de phosphite d'aluminium de formule (III) avec des sels d'aluminium.

10. Procédé pour la préparation de mélanges d'agents ignifuges selon l'une ou plusieurs des revendications 1 à 9, **caractérisé en ce qu'**on mélange des agents ignifuges sous forme de poudre avec des phosphites d'aluminium des formules (II) et/ou (III) et/ou des mélanges de phosphite d'aluminium de formule (III) avec des sels d'aluminium sous forme de poudre.

11. Utilisation de mélanges d'agents ignifuges selon l'une ou plusieurs des revendications 1 à 9 comme produit intermédiaire pour d'autres synthèses, comme liant, comme réticulant ou, selon le cas, accélérateur lors du durcissement de résines époxy, de polyuréthanes et de résines de polyester insaturées, comme stabilisants de polymères, comme agents de phytoprotection, comme agents de séquestration, comme additif d'huile minérale, comme agent de protection contre la corrosion, dans des applications d'agents de lavage et de nettoyage et dans des applications électroniques.

12. Utilisation de mélanges d'agents ignifuges selon l'une ou plusieurs des revendications 1 à 9 dans ou comme agent ignifuge, en particulier dans ou comme agent ignifuge pour des laques claires et des revêtements intumescents, dans ou comme agent ignifuge pour le bois et d'autres produits cellulosiques, dans ou comme agent ignifuge réactif et/ou non réactif pour des polymères, pour la préparation de masses de moulage polymères ignifugées ; pour la fabrication de corps façonnés polymères ignifugés et/ou pour l'apprêt ignifuge de polyesters et de tissus en cellulose pure ou de tissus mixtes à base de cellulose par imprégnation et/ou comme synergiste dans d'autres mélanges d'agents ignifuges.

13. Masses de moulage polymères, corps façonnés, films, fils et/ou fibres polymères thermoplastiques ou thermodurcissables, ignifugés, contenant 0,1 à 45% en poids de mélanges d'agents ignifuges selon l'une ou plusieurs des revendications 1 à 9, 55 à 99,9% en poids de polymère thermoplastique ou thermodurcissable ou de mélanges de ceux-ci, 0 à 55% en poids d'additifs et 0 à 55% en poids de charge ou de matériaux de renforcement, la somme des composants valant 100% en poids.

14. Masses de moulage polymères, corps façonnés, films, fils et/ou fibres polymères, thermoplastiques ou thermodurcissables, ignifugés, contenant 1 à 30% en poids de mélanges d'agents ignifuges selon l'une ou plusieurs des revendications 1 à 9, 10 à 97% en poids de polymère thermoplastique ou thermodurcissable ou de mélanges de ceux-ci, 1 à 30% en poids d'additifs et 1 à 30% en poids de charge ou de matériaux de renforcement, la somme des composants valant 100% en poids.

15. Masses de moulage polymères, corps façonnés, films, fils et/ou fibres polymères, thermoplastiques ou thermodurcissables, ignifugés, contenant des mélanges d'agents ignifuges selon l'une ou plusieurs des revendications 1 à 9, **caractérisés en ce qu'**il s'agit, pour le matériau synthétique, de polymères thermoplastiques du type polystyrène-HI (High-Impact), polyphénylénéther, polyamide, polyester, polycarbonate et de leurs mélanges ; ou de mélanges polymères de type ABS (acrylonitrile-butadiène-styrène) ou PC/ABS (polycarbonate/acrylonitrile-butadiène-styrène) ou PPE/HIPS (polyphénylénéther/polystyrène-HI), de matériaux synthétiques et/ou de polymères thermodurcissables du type polyester insaturé ou résine époxydes.
